# EUROPÄISCHE PATENTSCHRIFT

(11) **EP 0 639 783 B1**
(45) Veröffentlichungstag und Bekanntmachung des Hinweises auf die Patenterteilung: **13.10.1999**
(21) Anmeldenummer: 94111959.6
(22) Anmeldetag: 01.08.1994
(51) Int. Cl.: G02B 6/42, G02B 13/14, G01J 5/06

(54) **Detektoreinrichtung**
Detection device
Dispositif de détection infrarouge

(30) Priorität: 17.08.1993 DE 4327656
(43) Veröffentlichungstag der Anmeldung: 22.02.1995
(73) Patentinhaber: BRITISH AEROSPACE PUBLIC LIMITED COMPANY, Farnborough, Hants. GU14 6YU (GB)
(72) Erfinder: Toma, Dr. Christoph, D-85716 Unterschleissheim (DE); Erdmann, Matthias, D-80333 München (DE); Schweiger, Johann, D-85354 Freising (DE); Pietzsch, Dr. Karl, D-82538 Geretsried (DE)
(74) Vertreter: Pätzold, Herbert, Dr.-Ing.

(56) Entgegenhaltungen:
- EP-A- 0 408 235
- FR-A- 1 393 576
- GB-A- 2 233 854
- US-A- 4 820 923

## Beschreibung

Die Erfindung bezieht sich auf ein Infrarot-Detektoreinrichtung gemäß dem Oberbegriff des Anspruches 1.

Infrarot-Detektoreinrichtungen, die ein gekühltes Dewar aufweisen, in dem sich ein Infrarotempfänger, vorzugsweise ein flächiges Detektorelement (Focal Plane Array (oder abgebüszt FPA) befindet und das zur IR-Optik mit einem durch ein IR-Strahlen-durchlässiges IR-Fenster abgeschlossen ist, sind hinlänglich bekannt. Das Dewar besteht vielfach aus einem an ein Vakuum angeschlossenes Gehäuse, das nach außen von dem IR-Fenster abgeschlossen ist. Innerhalb des Gehäuses befindet sich gegenüber dem IR-Fenster ein vorzugsweise hohlraumförmiges Kälteschild zur weitgehenden Abschirmung der umgebenden Wärmestrahlung des Gerätes bis auf eine Strahleintrittsöffnung, die die nach dem Stand der Technik optische Apertur bestimmt und von einer körperlichen, gegebenenfalls gekühlten und geschwärzten inneren Kaltblende gebildet ist, die sich im Dewar befindet und als sogenannte Hinterblende in Lichtrichtung gesehen hinter der IR-Optik liegt, was von erheblichem Nachteil für den Optik-Entwurf ist. Die innere Kaltblende ist somit gleichzeitig die Austrittspupille des optischen Systems. Optische Vignettierungen dieser Pupille führen in diesem Fall zu unerwünschtem Eintritt von Wärmestrahlung in die Strahlendetektoreirichtung. Die Folgen für den Optik-Entwurf sind überhöhte Freidurchmesser der Linsen, was zu Volumen-, Gewichts- und Preisnachteilen führt, es sei denn, man nimmt Vignettierung mit den damit verbundenen Nachteilen in Kauf. Diese Nachteile sind besonders gravierend für Infrarot-Strahlendetektoreinrichtungen, die mit ausgedehnten FPAs arbeiten, und bei größeren Brennweiten der Optik bzw. großer Eintrittspupille (absolut größere Freidurchmesser der Linsen-elemente/Frontlinse).

Durch die GB-A-2 233 854 ist eine Infrarot-Detektoreinrichtung bekannt geworden, die sogenannte Narcissus-Kälteschilde (Narcissus Cold Shields) aufweist, die bewirken, daß optische Strahlen, die von dem Detektorelement ausgehen und außerhalb der optischen Pupille liegen, auf den Detektor zurückreflektiert werden. (Das Detektorelement sieht sich selbst). Eine solche Rückreflexion von optischen Strhalen ausgehend von dem Detektorelement auf sich zurück, führen vor allem bei FPAs zu unbefriedigenden Ergebnissen.

Durch die US-A-4 820 923 ist noch eine weitere Infrarot-Detektoreinrichtung bekannt geworden, die ein äußeres Kälteschild aus mehreren gestaffelt angeordneten körperlichen Blenden aufweist, die jeweils eine solche torische Gestalt besitzen, daß die von den torischen Blenden rückreflektierten optischen Strahlen kein scharfes Reflexbild auf der optischen Fläche des Detektorelements, sondern ein Bild mit einer ringförmig verschmierten Intensität bidlen.

Aufgabe der vorliegenden Erfindung ist es, eine IR-Optik der eingangs genannten Art anzugeben, die auch bei Verwendung von großflächigen FPAs und/oder langbrennweitigen Objektiven mit einer vergleichsweise gewichts- und volumenmäßig kleinen vignettierungsfreien Optik auskommt, wobei auch die Anzahl und die Größe der Linsenelemente gegenüber vergleichbaren bekannten Optiken wesentlich verringert ist.

Die Aufgabe wird erfindungsgemäß mit den kennzeichnenden Merkmalen des Anspruches 1 gelöst.

Vorteilhafte Ausführungen ergeben sich aus den Merkmalen der Unteransprüche und der nachfolgenden Beschreibung für ein Ausführungsbeispiel.

Eine Optik nach der erfindungsgemäßen Lehre mit gestaffelt angeordneten äußeren Kaltblenden weist im Vergleich zum Stand der Technik erhebliche Vorteile auf, wie sie sich in erster Linie aus der Betrachtung der optischen Transmission und des verbesserten Kälteschild-Wirkungsgrads ableiten lassen. Die gestaffelte Anordnung von sphärischen oder asphärischen kalottenförmigen Kaltblenden ermöglicht beispielsweise einen Linsenaufbau einer vierlinsigen vignettierungsfreien Optik von geringem Gewicht und vergleichsweise kleinem Volumen, wobei die äußeren Kaltblenden teils vor, teils zwischen und teils hinter den Linsen angeordnet sind. Dabei läßt sich die Optik vorteilhafterweise ohne Überhöhung der Frontlinse ausführen. Außerdem sind vergleichsweise große erfindungsgemäße Kälteschildwirkungsgrade, beispielsweise > 83 %, erreichbar. Besonders vorteilhaft ist die Ausbildung eines erfindungsgemäßen Objektivs mit einer telezentrischen Vorderblende ohne Pupillenversetzer. Die Aperturblende kann aber auch zwischen Linsenelementen angeordnet sein. Durch zwischengeschaltete äußere Kaltblenden lassen sich die Freidurchmesser der vorgeschalteten Linsenelemente reduzieren. Vorteilhaft ist die Aperturblende in ihrer Öffnung einstellbar und/oder auswechselbar ausgebildet. Das erfindungsgemäße Objektiv kann auch Bestandteil einer komplexeren IR-Optik sein. So kann die erfindungsgemäße Optik, z.B. einem Vorschalt-Afokal nachgeschaltet sein.

Das Dewar-Design kann konventionell oder entsprechend der älteren Patentanmeldung P 43 03 231.1 ausgeführt sein.

Die Erfindung wird nachfolgend anhand eines Ausführungsbeispiels näher erläutert, das in einer Zeichnung schematisch dargestellt ist. Hierin zeigt:
- Figur 1: eine erfindungsgemäße IR-Optik mit einer telezentrischen Vorderblende, und
- Figur 2: einen Teil der Optik nach Fig. 1

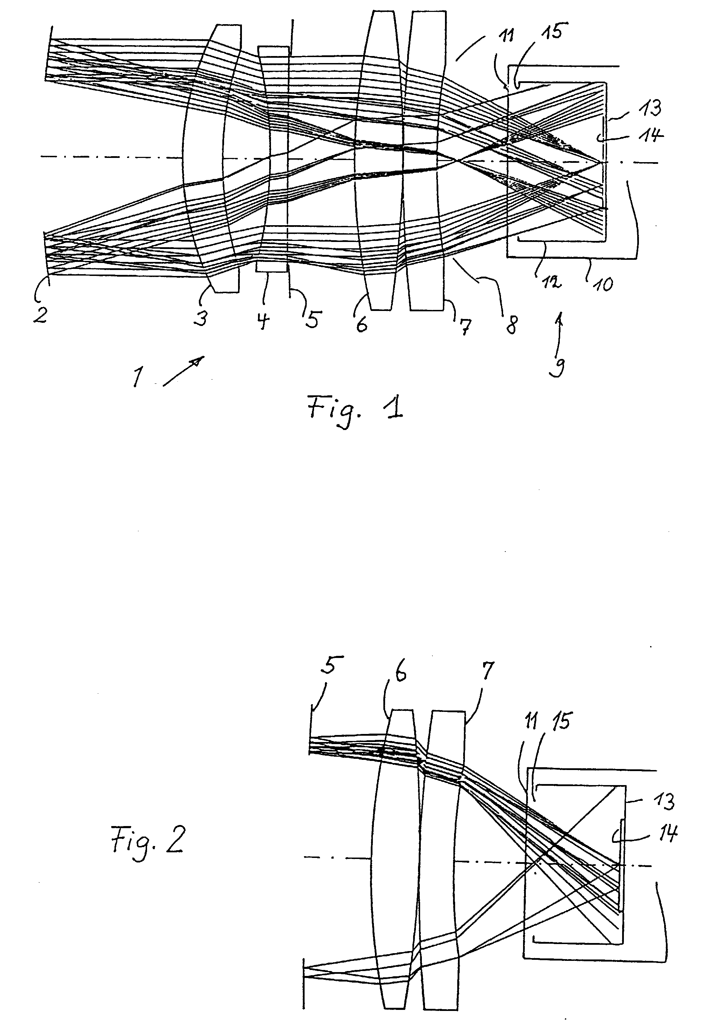

In Fig. 1 besteht eine erfindungsgemäß ausgebildete IR-Optik 1 in Lichtrichtung der Reihe nach aus einer ersten Kaltblende (Vorderblende) 2, einer ersten und zweiten Linse 3 und 4, einer zweiten Kaltblende (Zwischenblende) 5, einer dritten und vierten Linse 6 und 7 und einer dritten Kaltblende 8. Die erfindungsgemäße Optik (2 bis 8) ist einer IR-Strahlendetektoreinrichtung 9 unmittelbar vorgeschaltet.

Die äußeren Kaltblenden 2, 5 und 8 bilden gemeinsam ein äußeres Kälteschild, das teils vor, teils zwischen und teils hinter der Linsenanordnung 3, 4, 6 und 7 angeordnet ist.

Die Strahlendetektoreinrichtung 9 weist ein Dewar 10 auf, das aus einem an ein Vakuum angeschlossenen Gehäuse besteht, das strahleneintrittsseitig von einem infrarotdurchlässigen Fenster (IR-Fenster) 11 verschlossen ist, welches der Einfachheit halber nicht näher dargestellt ist. Innerhalb des Dewars 10 befindet sich gegenüber dem IR-Fenster 11 ein hohlraumförmiges Kälteschild (inneres Kälteschild) 12, an dessen gekühlter, dem IR-Fenster 11 mit Abstand gegenüberliegender Rückwand 13 ein als groflächiges Focal Plane Array (FPA) ausgebildetes Detektorelement 14 angeordnet ist. Das innere Kälteschild dient zur weitgehenden Abschirmung der umgebenden Wärmestrahlung der Strahlendetektoreinrichtung 9 bis auf die blendenartige Strahleneintrittsöffnung (innere Kaltblende) 15 gegenüber dem IR-Fenster 11. Mit anderen Worten, es sollen die Falschlichtanteile aus der warmen Umgebung weitgehend unterdrückt werden, die nicht nur zum Rauschen der Strahlendetektoreinrichtung beitragen (schlechtere NETD), sondern vor allem den nutzbaren Dynamikbereich des IR-Detektorelementes 14 (geringe Sättigungstemperatur) reduziert.

Eine Strahlendetektoreinrichtung 9 mit einem in einem Dewar befindlichen inneren Kälteschild, in dem sich das gekühlte Detektorelement gegenüber einer inneren Kaltblende befindet, die die Strahleneintrittsöffnung des inneren Kälteschldes bestimmt, ist hinlänglich bekannt. Insoweit wird auf die DE-37 16 358 verwiesen. Ein inneres Kälteschild, insbesondere für ein FPA, das in der optischen Achse gegenüber den bekannten inneren Kälteschilden auf neue Art wesentlich verkürzt ist, ist in der älteren DE-43 03 231.1 vom 4.02.1993 beschrieben.

Das erfindungsgemäße IR-Objektiv ist unabhängig vom Dewar-Design. Vorzugsweise ist das erfindungsgemäße IR-Objektiv einem Dewar mit einem inneren Kälteschild nach der Lehre der vorstehenden DE-43 03 231.1 unmittelbar vorgeschaltet. Das erfindungsgemäße IR-Objektiv ist insoweit aber keiner Beschränkung unterworfen. Das Dewar-Design kann konventionell ausgeführt sein.

In Fig. 1 ist die vorderste (erste) Kaltblende 2 die Aperturblende, die in der optischen Achse einen relativ großen Abstand von der ersten Linse 3 aufweist, wie Fig. 1 verdeutlicht. An der Rückseite der zweiten Linse befindet sich die Zwischenblende 5. Durch diese als Baffle wirkende Zwischenblende 5 können die Freidurchmesser der ersten und zweiten Linse 3 und 4 im Vergleich zu den Freidurchmessern der dritten und vierten Linse 6 und 7 vorteilhafterweise klein gehalten werden, die durch die dritte Kaltblende 8 festgelegt sind. Die dritte bikonvexe Linse 6 kann dabei vorteilhafterweise in ihrer Dicke relativ großzügig bemessen werden, so daß dünne Randbereiche erfindungsgemäß vermieden werden können.

Fig. 1 zeigt den Spezialfall eines erfindungsgemäßen Objektivs mit telezentrischer Vorderblende 2 ohne Pupillenversetzer. Die dritte Kaltblende 8 ist unmittelbar vor dem IR-Fenster 11 des Dewars 10 angeordnet, das gleichermaßen zum Dewar oder zum erfindungsgemäßen IR-Objektiv gerechnet werden kann. Die Kaltblende 8 kann entsprechend der DE-37 16 358 oder der DE-37 23 982 ausgebildet und angeordnet sein.

Wie Fig. 1 zeigt, ist die Linsenanordnung aus den Linsen 3, 4 und 6, 7 zusammen mit dem äußeren Kälteschild 2, 5 und 8 erfindungsgemäß derart ausgelegt, daß jeder optische Strahl, der von dem Detektorelement 14 ausgeht und außerhalb der optischen Pupille liegt, über die Linsenanordnung auf die Vorderblende 2 und von hier über die Linsenanordnung auf das innere Kälteschild 12 zurückreflektiert wird.

Soweit aber ein Teil der zurückreflektierten Lichtstrahlen auf die optische Fläche des Detektorelementes 14 fällt, erzeugt dieser kein scharfes Reflexbild. Dem Fachmann ist andererseits nach der Lehre der Erfindung klar, daß die Verhältnisse auch so gewählt sein können, daß die von der Vorderblende 2 zurückreflektierten Strahlen in bzw. auf das innere Kälteschild 12 außerhalb der optischen Fläche des Detektorelementes 14 treffen. Im übrigen existiert in dem Strahlengang zwischen dem äußeren Kälteschild 2, 5 und 8 und dem Dewar 10 kein Zwischenbild, wobei der Deutlichkeit wegen nur reflektierte Strahlen zwischen dem inneren Kälteschild 11 und der Vorderblende 2 dargestellt sind. Reflektierte Strahlen zwischen dem inneren Kälteschild 12 und der Zwischenblende 5 sind in Fig. 2 ersichtlich.

Fig. 2 zeigt der besseren Übersicht wegen nur die Strahlengänge zwischen der Zwischenblende 5 und dem inneren Kälteschild 12. Die Kaltblende 8 ist hier nicht dargestellt. Auch hier gelangt jeder optische Strahl, der von dem Detektorelement 14 ausgeht und außerhalb der optischen Pupille liegt über die Linsen 6 und 7 auf die Zwischenblende 5 und wird von dieser über die Linsen 6 und 7 in bzw. auf das innere Kälteschild zurückreflektiert. Auch hier gilt, daß derjenige Teil der von der Zwischenblende 5 zurückreflektierten Lichtstrahlen, die auf die optische Fläche des Detektorelementes 14 fallen, dort kein scharfes Reflexbild erzeugt. Dabei können die Verhältnisse auch hier so gewählt sein, daß die von der Zwischenblende 5 zurückreflektierten Lichtstrahlen über die Linsen 6 und 7 in bzw. auf das innere Kälteschild außerhalb der optischen Fläche des Detektorelementes 14 fallen.

Die Erfindung ist nicht auf die Ausführung nach Fig. 1 mit der telezentrischen Vorderblende 2 als Aperturblende beschränkt. So kann es auch vorteilhaft sein, die Vorderblende unmittelbar vor oder hinter der Frontlinse 3 anzuordnen. Ferner kann es vorteilhaft sein, die Zwischenblende als Aperturblende auszubilden.

Weiterhin kann es auch vorteilhaft sein, das äußere Kälteschild aus gestaffelt angeordneten äußeren Kaltblenden so anzuordnen und auszubilden, daß es vermittels der Linsenanordnung die Öffnung der inneren Kaltblende auf sich selber abbildet. Weiterhin können eine oder mehrere der äußeren Kaltblenden als geschwärzte gekühlte Flächen (Lichtfallen oder Retro-Reflektoren) ausgebildet sein.

Gemäß Fig. 1 sind die äußeren Kaltblenden 2, 5 und 8 kalottenförmig ausgebildet. Es kann sich um verspiegelte sphärische oder asphärische Kalotten handeln.

Die Vorderblende 2 in Fig. 1 stellt eine optische Unendlichkeitsschnittstelle der erfindungsgemäßen IR-Optik dar. Damit ist dem Fachmann klar, daß die erfindungsgemäße IR-Optik vorteilhafterweise auch Bestandteil einer komplexen IR-Optik sein kann. Hierbei kann es sich zum Beispiel, und ohne jede Beschränkung, um ein Vorschalt-Afokal handeln.

Insbesondere im Zusammenhang mit einer komplexen IR-Optik kann es vorteilhaft sein, wenn die Aperturblende als Vorder- oder Zwischenblende in ihrer Öffnung einstellbar ausgebildet ist. Die Aperturblende kann auch auswechselbar ausgebildet sein, so daß Aperturblenden mit unterschiedlichen Öffnungsdurchmessern einsetzbar sind. Von veränderten Öffnungsgrößen der Aperturblende bleiben die Linsen in ihrer gewählten Anordnung und Ausbildung bis zu einer maximal zulässigen Öffnungsgröße der optischen Auslegung unabhängig.

Die Erfindung ist nicht auf das Ausführungsbeispiel zur Verdeutlichung der Erfindungslehre beschränkt nach deren Kenntnis der Fachmann ohne weiteres in der Lage ist, weitere Ausführungsbeispiele zu entwerfen, die von der Erfindungslehre mitumfaßt werden. So ist die Erfindung auch für eine Infrarotstrahlendetektoreinrichtung geeignet, bei der der Detektor nicht gekühlt ist bzw. nicht gekühlt zu sein braucht.

## Patentansprüche

1. Infrarot-Detektoreinrichtung mit
-- einem Detektorelement (14)
-- einer das Detektorelement von Infrarotstrahlen weitgehend abschirmenden ersten Einrichtung, d.h. inneres Kälteschild (12), mit einer ersten körperlichen Strahleneintrittsöffnung, d.h. innere Kaltblende (15),
-- einer Infrarot-Optik (IR-Optik 1) zur Abbildung eines Infrarotbildes auf dem Detektorelement, und
-- einer in Lichtrichtung dem inneren Kälteschild vorgeschalteten, von dem inneren Kälteschild thermisch getrennten zweiten Einrichtung, d.h. äußeres Kälteschild (2; 5; 8), mit einer zweiten körperlichen Strahleneintrittsöffnung, d.h. äußere Kaltblende, wobei die äußere Kaltblende von mehreren gestaffelt angeordneten körperlichen blenden (2; 5; 8) gebildet ist, die eine unmittelbar vor oder hinter einer Frontlinse (3) angeordnete Vorderblende (2) und eine dem inneren Kälteschild (12) unmittelbar vorgeschaltete Hinterblende (8) enthält,
**dadurch gekennzeichnet,**
daß die äußere Kaltblende derart gestaltet ist,
daß jeder optische Strahl, der von dem Detektorelement ausgeht und außerhalb der optischen Pupille liegt, über das äußere Kälteschild zurückreflektiert wird und in oder auf das innere Kälteschild außerhalb der optischen Fläche des Detektorelementes trifft.

2. Einrichtung nach Anspruch 1, dadurch gekennzeichnet, daß zwischen der Vorder- und der Hinterblende (2 und 8) zwischen zwei Linsen (4 und 6) eine Zwischenblende (5) angeordnet ist, wobei die Vorder- oder die Zwischenblende die Aperturblende ist.

3. Einrichtung nach Anspruch 1, dadurch gekennzeichnet, daß die Vorderblende (2) telezentrisch angeordnet ist.

4. Einrichtung nach Anspruch 1, dadurch gekennzeichnet, daß die Kaltblenden (2; 5; 8) jeweils vermittels der Linsen (3, 4; 6; 7) die Öffnung der inneren Kaltblende auf sich selber abbildet.

5. Einrichtung nach Anspruch 1, dadurch gekennzeichnet, daß die Zwischenblende (5) zur Reduzierung der Freidurchmesser der vorgeschalteten Linse bzw. Linsen dient.

6. Einrichtung nach Anspruch 1 und 5, dadurch gekennzeichnet, daß die Vorderblende (2) derart ausgebildet ist, daß das von ihr erzeugte Reflexbild des Detektorelements nicht auf oder in der unmittelbaren Nähe der optischen Oberfläche des Detektorelementes liegt.

7. Einrichtung nach Anspruch 1, dadurch gekennzeichnet, daß wenigstens eine der äußeren Kaltblenden (2; 5; 8) als geschwärzte gekühlte Flächen, d.h. Lichtfallen, ausgebildet sind.

8. Einrichtung nach Anspruch 1, dadurch gekennzeichnet, daß wenigstens eine der äußeren Kaltblenden (2; 5; 8) verspiegelte sphärische oder asphärische Kalotten sind.

9. Einrichtung nach Anspruch 1, dadurch gekennzeichnet, daß wenigstens eine der äußeren Kaltblenden (2; 5; 8) als Retro-Reflektoren ausgebildet sind.

10. Einrichtung nach Anspruch 1, dadurch gekennzeichnet, daß die IR-Optik (1) in Lichtrichtung aus der Vorderblende (2), einem ersten und zweiten optischen Element (3, 4), der Zwischenblende (5), einem dritten und vierten optischen Element (6, 7) und der Hinterblende (8) besteht, wobei die Zwischenblende (5) an oder nahe der Rückseite des zweiten optischen Elements (4) und die Hinterblende (8) nahe oder an der Rückseite des vierten optischen Elements (7) angeordnet ist.

11. Einrichtung nach Anspruch 2, dadurch gekennzeichnet, daß die Aperturblende in ihrer Öffnung einstellbar ausgebildet ist.

12. Einrichtung nach Anspruch 2 oder 11, dadurch gekennzeichnet, daß die Aperturblende auswechselbar ausgebildet ist.

13. Einrichtung nach Anspruch 1, dadurch gekennzeichnet, daß das IR-Objektiv (1) Bestandteil einer komplexen IR-Optik, d.h. Vorschalt-Afokal, ist.

## Claims

1. Infrared detection device with
a detection element (14)
a first device, i.e. an inner cold shield (12), extensively screening the detection element from infrared rays, with a first incorporated beam inlet opening, i.e. inner cold screen (15),
an infrared optic (IR-optic 1) for imaging an infrared picture on the detection element, and
a second device, i.e. an outer cold shield (2; 5; 8), which is serially disposed in the direction of light to the inner cold shield and which is separated thermally from the inner cold shield, with a second incorporated beam inlet opening, i.e. outer cold screen, the outer cold screen being formed from several incorporated screens (2; 5; 8), which are arranged staggered, and containing a front screen (2) arranged directly before or behind a front lens (3) and a rear screen (8) serially disposed immediately at the inner cold shield (12)
characterised in that
the outer cold screen is formed such that each optical beam, which is emitted from the detection element and is located outwith the optical aperture diaphragm, is reflected back via the outer cold shield and lands in or on the inner cold shield outwith the optical surface of the detection element.

2. Device according to Claim 1, characterised in that between the front and rear screen (2 and 8) an intermediate screen (5) is arranged between two lenses (4 and 6), the front or the intermediate screen being the aperture screen.

3. Device according to Claim 1, characterised in that the front screen (2) is arranged telecentrically.

4. Device according to Claim 1, characterised in that the cold screens (2; 5; 8) respectively image on themselves the opening of the inner cold screen by means of the lenses (3; 4; 6; 7).

5. Device according to Claim 1, characterised in that the intermediate screen (5) serves for reducing the free diameter of the serially disposed lens or lenses.

6. Device according to Claim 1 and 5, characterised in that the front screen (2) is designed such that the reflected picture of the detection element produced by said front screen (2) is not located on or in the immediate vicinity of the optical surface of the detection element.

7. Device according to Claim 1, characterised in that at least one of the outer cold screens (2; 5; 8) are designed as blackened cooled surfaces, i.e. light traps.

8. Device according to Claim 1, characterised in that at least one of the outer cold screens (2; 5; 8) are metallised spherical or aspherical caps.

9. Device according to Claim 1, characterised in that at least one of the outer cold screens (2; 5; 8) are designed as retro-reflectors.

10. Device according to Claim 1, characterised in that the IR-optic (1) in the direction of light consists of the front screen (2), a first and second optical element (3, 4), the intermediate screen (5), a third and fourth optical element (6, 7) and the rear screen (8), the intermediate screen (5) being arranged on or near the rear side of the second optical element (4) and the rear screen (8) being arranged near or on the rear side of the fourth optical element (7).

11. Device according to Claim 2, characterised in that the aperture screen is designed to be adjustable in its opening.

12. Device according to Claim 2 or 11, characterised in that the aperture screen is designed to be exchangeable.

13. Device according to Claim 1, characterised in that the IR-objective (1) is a component of a complex IR-optic, i.e. an afocal-adjuster F.

## Revendications

1. Dispositif détecteur infrarouge comprenant :
- un élément détecteur (14),
- un premier dispositif protégeant dans une large mesure l'élément détecteur vis-à-vis de rayons infrarouges, c'est-à-dire un écran froid (12) intérieur, comportant une première ouverture matérielle d'entrée de rayons, c'est-à-dire un diaphragme froid (15) intérieur,
- une optique infrarouge (optique IR 1) servant à former une image infrarouge sur l'élément détecteur et
- un second dispositif disposé en amont de l'écran froid intérieur suivant la direction de la lumière et séparé thermiquement de l'écran froid intérieur, c'est-à-dire un écran froid extérieur (2 ; 5 ; 8), comportant une seconde ouverture matérielle d'entrée de rayons, c'est-à-dire un diaphragme froid extérieur, le diaphragme froid extérieur étant formé de plusieurs diaphragmes matériels (2 ; 5 ; 8) échelonnés, contenant un diaphragme amont (2), disposé directement en amont ou en aval d'une lentille avant (3), et un diaphragme aval (8) disposé directement en amont de l'écran froid intérieur (12),
caractérisé
en ce que le diaphragme froid extérieur est agencé de façon telle que chaque rayon optique qui sort de l'élément détecteur et est situé en dehors de la pupille optique est réfléchi en retour au moyen de l'écran froid extérieur et parvient dans ou sur l'écran froid intérieur en dehors de la surface optique de l'élément détecteur.

2. Dispositif suivant la revendication 1, caractérisé en ce qu'un diaphragme intermédiaire (5) est disposé, entre le diaphragme amont et le diaphragme aval (2 et 8), entre deux lentilles (4 et 6), le diaphragme amont ou le diaphragme intermédiaire constituant le diaphragme d'ouverture.

3. Dispositif suivant la revendication 1, caractérisé en ce que le diaphragme amont (2) est disposé d'une manière télécentrique.

4. Dispositif suivant la revendication 1, caractérisé en ce que les diaphragmes froids (2 ; 5 ; 8) forment, chacun au moyen des lentilles (3, 4 ; 6 ; 7), une image sur eux-mêmes de l'ouverture du diaphragme froid intérieur.

5. Dispositif suivant la revendication 1, caractérisé en ce que le diaphragme intermédiaire (5) sert à la réduction des diamètres libres de la ou des lentilles disposées en amont.

6. Dispositif suivant la revendication 1 et 5, caractérisé en ce que le diaphragme amont (2) est agencé de façon telle que l'image par réflexion qu'il donne de l'élément détecteur n'est pas située sur la surface optique de l'élément détecteur ou au voisinage immédiat de celle-ci.

7. Dispositif suivant la revendication 1, caractérisé en ce qu'au moins l'un des diaphragmes froids extérieurs (2 ; 5 ; 8) est agencé sous forme de surface refroidie noircie, c'est-à-dire de piège à lumière.

8. Dispositif suivant la revendication 1, caractérisé en ce qu'au moins l'un des diaphragmes froids extérieurs (2 ; 5 ; 8) est agencé sous forme de calotte sphérique ou non sphérique métallisée.

9. Dispositif suivant la revendication 1, caractérisé en ce qu'au moins l'un des diaphragmes froids extérieurs (2 ; 5 ; 8) est agencé sous forme de rétroréflecteur.

10. Dispositif suivant la revendication 1, caractérisé en ce que l'optique IR (1) est constituée, suivant la direction de la lumière, du diaphragme amont (2), d'un premier et un deuxième éléments optiques (3, 4), du diaphragme intermédiaire (5), d'un troisième et un quatrième éléments optiques (6, 7) et du diaphragme aval (8), le diaphragme intermédiaire (5) étant disposé sur la face arrière du deuxième élément optique (4) ou à son voisinage et le diaphragme aval (8) sur la face arrière du quatrième élément optique (7) ou à son voisinage.

11. Dispositif suivant la revendication 2, caractérisé en ce que le diaphragme d'ouverture est agencé de façon à être réglable en ouverture.

12. Dispositif suivant la revendication 2 ou 11, caractérisé en ce que le diaphragme d'ouverture est réalisé de façon à pouvoir être remplacé.

13. Dispositif suivant la revendication 1, caractérisé en ce que l'objectif IR (1) fait partie d'une optique IR complexe, c'est-à-dire d'un système afocal à insertion en amont.
